**Europäisches Patentamt**

**European Patent Office**

**Office européen des brevets**

(11) Veröffentlichungsnummer: **0 451 493 A1**

## (12) EUROPÄISCHE PATENTANMELDUNG

(21) Anmeldenummer: **91103155.7**

(22) Anmeldetag: **02.03.91**

(51) Int. Cl.5: **H01P 3/16**, H01P 1/02, G02B 6/02

(30) Priorität: **12.04.90 DE 4011829**

(43) Veröffentlichungstag der Anmeldung: **16.10.91 Patentblatt 91/42**

(84) Benannte Vertragsstaaten: **DE ES FR GB IT NL**

(71) Anmelder: **ANT Nachrichtentechnik GmbH Gerberstrasse 33 W-7150 Backnang(DE)**

(72) Erfinder: **Neumann, Ernst-Georg, Prof.Dr. Zillertaler Strasse 37 W-5600 Wuppertal 12(DE)**

(54) **Dielektrischer Wellenleiter.**

(57) Es ist ein flexibler dielektrischer Wellenleiter anzugeben, der eine möglichst geringe Krümmungsdämpfung aufweist.

Der dielektrische Wellenleiter besteht aus einem zentralen biegsamen Leiter (L), auf der mehrere gegenseitig beabstandete dielektrische Scheiben (S) aufgereiht sind.

Fig.1

Im Bereich kurzwelliger Mikrowellen (Millimeter- und Submillimeterwellen) werden als Alternative zu den metallischen Hohlleitern dielektrische Wellenleiter eingesetzt, weil sie eine vergleichsweise niedrige Dämpfung aufweisen. Ein aus einem verlustarmen Dielektrikum bestehender, von Luft umgebener stabförmiger dielektrischer Wellenleiter ist beispielsweise bekannt aus Int. J. Electronics, 1975, Vol. 39, No. 3, Seiten 275 - 287. Ein Stab aus einem festen Dielektrikum läßt sich aber wegen seiner großen Biegesteifigkeit nur mit einem relativ zum Stabdurchmesser großen Radius krümmen. Aus der Literatur sind Vorschläge bekannt, wie man dielektrische Wellenleiter flexibler machen kann. In IEEE Transactions on Microwave Theory and Technics, Vol. 36, No. 5, Mai 1988, Seiten 882 - 890 ist eine aus einem Polymer-Schlauch bestehende dielektrische Leitung beschrieben, die mit einem Pulver aus einem Dielektrikum hoher Dielektrizitätskonstante gefüllt ist. Aus dem Mikrowellenmagazin, Vol. 14, No. 7, 1988, Seiten 656 - 658 geht eine flexible dielektrische Leitung hervor, deren Kern aus einem dichten mikroporösen Polymer besteht und von einem Mantel aus einem weniger dichten mikroporösen Polymer umgeben ist. All diese bekannten Leitungen dürfen nur mit einem relativ großen Krümmungsradius verlegt werden, damit nicht zu starke Leistungsverluste durch Abstrahlung im Krümmungsbereich auftreten.

In der DE 32 14 471 A1 sind Maßnahmen angegeben, um die Krümmungsdämpfung eines dielektrischen Wellenleiters zu vermindern. Danach wird die Dielektrizitätskonstante auf der Innenseite des Krümmungsbogens relativ zu der gerade verlaufenden Leitung vergrößert und auf der Außenseite des Krümmungsbogens vermindert. Dadurch wird die lokale Phasengeschwindigkeit der den Wellenleiter durchlaufenden Welle auf der Bogeninnenseite reduziert und auf der Bogenaußenseite erhöht, so daß die Wellenfronten schwenken und die Welle der Krümmung des dielektrischen Wellenleiters folgt. In der genannten Offenlegungsschrift De 32 14 471 A1 wurde auch eine quantitative Anweisung zur vollständigen Vermeidung von Krümmungsverlusten abgeleitet. Und zwar verschwindet die Krümmungsdämpfung, wenn im gekrümmten Bereich des dielektrischen Wellenleiters die folgende optimale Verteilung der Dielektrizitätskonstanten realisiert wird:

$$\epsilon_{opt}(x, y) = (\frac{R}{r})^2 \cdot \epsilon_g(x, y)$$

Hier ist R der Krümmungsradius, r der Abstand des Aufpunktes von der Krümmungsachse und $\epsilon_g(x, y)$ die transversale Verteilung der Dielektrizitätskonstanten in der geraden dielektrischen Leitung. Bei festverlegten dielektrischen Wellenleitern sind die Krümmungsradien im voraus bekannt und die optimalen Profile der Dielektrizitätskonstanten lassen sich bei der Herstellung realisieren. Dies geht natürlich nicht bei flexiblen dielektrischen Wellenleitern, deren Krümmungsbereiche und Krümmungsradien nicht fest vorgegeben sind.

Aus der DE-PS 899 685 ist ein Oberflächenwellenleiter bekannt, der aus einem mit einem Dielektrikum beschichteten metallischen Leiter besteht. Die dielektrische Schicht dieses auch als Harms-Goubau-Leitung bezeichneten Oberflächenwellenleiters ist in Form von Stegen auf dem metallischen Leiter aufgebracht. Diese in Stegen geformte dielektrische Schicht gewährleistet auch bei einer großen Schichtdicke und selbst bei Verwendung eines sehr spröden Dielektrikums mit geringem Verlustwinkel eine gute Biegsamkeit des Oberflächenwellenleiters.

Der Erfindung liegt die Aufgabe zugrunde, einen flexiblen dielektrischen Wellenleiter anzugeben, der eine möglichst geringe Krümmungsdämpfung aufweist.

Diese Aufgabe wird erfindungsgemäß durch die Merkmale des Patentanspruchs 1 gelöst. Vorteilhafte Ausführungen der Erfindung gehen aus den Unteransprüchen hervor. Durch die Gestaltung des dielektrischen Wellenleiters nach der Erfindung stellt sich jede notwendige Verteilung der Dielektrizitätskonstanten beim Biegen automatisch ein, so daß in jedem Krümmungsbereich und bei jedem Krümmungsradius die Dämpfung des Wellenleiters sehr gering bleibt.

Anhand eines in der Zeichnung dargestellten Ausführungsbeispiels wird nachfolgend die Erfindung näher erläutert.

Fig. 1    zeigt einen geraden und

Fig. 2    zeigt einen gekrümmten dielektrischen Wellenleiter.

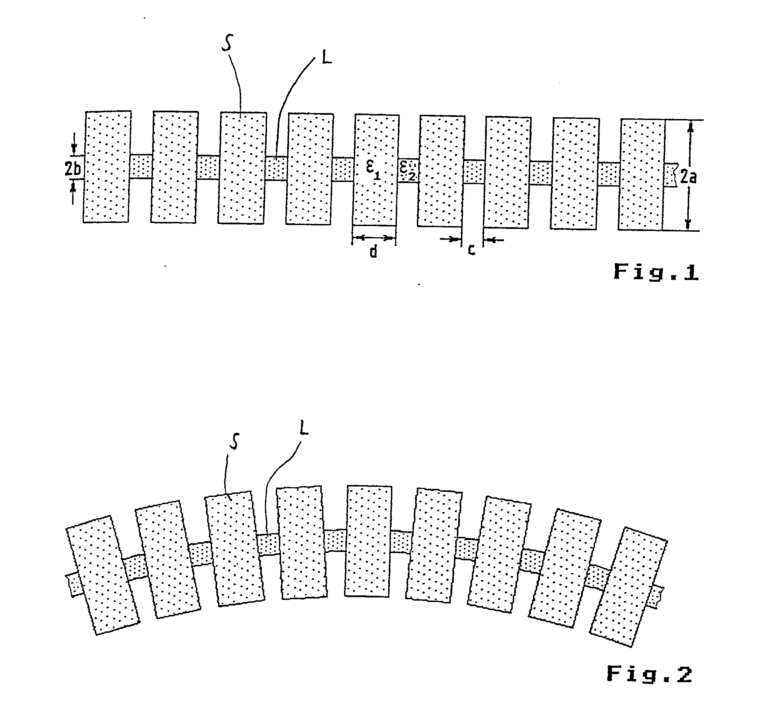

Der in den Figuren 1 und 2 dargestellten dielektrische Wellenleiter besteht aus einer dünnen, z. B. stabförmigen, zentralen biegsamen Leiter L, auf dem eine Vielzahl gegenseitig beabstandeter dielektrischer Scheiben S aufgereiht ist. Der zentrale Leiter L besteht aus einem Dielektrikum mit der Dielektrizitätskonstanten $\epsilon_2$. Die dielektrischen Scheiben S haben eine Dielektrizitätskonstante $\epsilon_1$, die entweder gleich oder verschieden ist gegenüber der Dielektrizitätskonstanten $\epsilon_2$ des zentralen dielektrischen Leiters L. Wie bereits erwähnt, kann der zentrale Leiter L stabförmig sein mit rundem oder mehreckigem Querschnitt. Er

EP 0 451 493 A1

kann aber auch als planare Leitung (Streifenleitung, Inselleitung, invertierte Streifenleitung etc. ) ausgeführt sein. Die Breite der einzelnen dielektrischen Scheiben S einschließlich dem Abstand zur jeweils benachbarten dielektrischen Scheibe S ist so zu dimensionieren, daß sie klein gegen die Wellenlänge der vom Leiter geführten (z. B. $HE_{11}$-) Welle sind. Dann verhält sich der dielektrische Wellenleiter wie eine in Längsrichtung homogene dielektrische Leitung mit konstanten Querschnittsabmessungen.

Wenn der dielektrische Wellenleiter, so wie in Fig. 1 dargestellt, geradlinig verläuft, ist die transversale Verteilung der Dielektrizitätskonstanten symmetrisch bezüglich der Leitungsachse. Wird nun die Leitung gekrümmt (vgl. Fig. 2), verringern sich die Abstände zwischen den dielektrischen Scheiben S auf der Bogeninnenseite und vergrößern sich auf der Bogenaußenseite. Dadurch vergrößert sich die effektive lokale Dielektrizitätskonstante - das ist die über eine Periode gemittelte Dielektrizitätskonstante - auf der Bogeninnenseite, während sie auf der Bogenaußenseite reduziert wird. Die Scherung der Verteilung der Dielektrizitätskonstanten wird umso stärker, je mehr der dielektrische Wellenleiter gekrümmt wird. Auf diese Weise erreicht man eine an jede Krümmung angepaßte Verteilung der Dielektrizitätskonstanten, die der optimalen Form gemäß der eingangs angegebenen Gleichung sehr nahe kommt.

Den Fig. 1 und 2 ist zu entnehmen, daß die dielektrischen Scheiben S eine konstante Dicke besitzen. Hiervon abweichend kann sich die Dicke der dielektrischen Scheiben S in Abhängigkeit vom Abstand von der Leitungslängsachse ändern. Damit läßt sich erreichen, daß die Dielektrizitätskonstante des äquivalenten, längshomogenen, geraden Wellenleiters auch vom Abstand von seiner Leitungsachse abhängig ist. Auf diese Weise lassen sich beliebige radiale Verteilungen der Dielektrizitätskonstanten des dielektrischen Wellenleiters realisieren. Es ist nämlich zu erwarten, daß nach der Erschließung des Submillimeter-Wellenbereichs auch dielektrische Wellenleiter mit speziellen Verteilungen der Dielektrizitätskonstanten Bedeutung erlangen.

In einer speziellen Ausführung ist der zentrale Leiter L stabförmig mit rundem Querschnitt und die konzentrisch darauf aufgesteckten dielektrischen Scheiben S sind kreisförmig. Sowohl der zentrale dielektrische Leiter L als auch die dielektrischen Scheiben S bestehen aus Polyäthylen mit einer Dielektrizitätskonstanten von $\epsilon_1 = \epsilon_2 = 2{,}3$. Der Radius a der dielektrischen Scheiben S, der Radius b des Leiters L, der Abstand c zwischen den dielektrischen Scheiben S und die Dicke d der dielektrischen Scheiben S sind bezogen auf die Vakuumwellenlänge $\lambda_0$ so dimensioniert:

$a / \lambda_0 = 0{,}8$,
$b / \lambda_0 = 0{,}16$
$c / \lambda_0 = 0{,}1$ und
$d / \lambda_0 = 0{,}2$.

Die vorangehende Beschreibung bezieht sich auf Wellenleiter für den Mikrowellenbereich. Die Erfindung ist aber auch auf Wellenleiter übertragbar, die für den optischen Wellenlängenbereich ausgelegt sind.

**Patentansprüche**

1. Dielektrischer Wellenleiter, dadurch gekennzeichnet, daß er aus einem zentralen biegsamen dielektrischen Leiter (L) besteht, auf dem mehrere von ihm radial abstehende dielektrische Stege (S) aufgereiht sind.

2. Dielektrischer Wellenleiter nach Anspruch 1, dadurch gekennzeichnet, daß das Dielektrikum des zentralen biegsamen dielektrischen Leiters (L) eine andere Dielektrizitätskonstante aufweist als die dielektrischen Stege (S).

3. Dielektrischer Wellenleiter nach Anspruch 1, dadurch gekennzeichnet, daß der zentrale biegsame dielektrische Leiter (L) und die dielektrischen Stege (S) die gleiche Dielektrizitätskonstante aufweisen.

4. Dielektrischer Wellenleiter nach einem der Ansprüche 1 bis 3, dadurch gekennzeichnet, daß der zentrale biegsame dielektrische Leiter (L) stabförmig ist und die auf ihr aufgereihten Stege die Form von Scheiben (S) haben, welche der dielektrische Leiter (L) zentrisch durchdringt.

5. Dielektrischer Wellenleiter nach einem der Ansprüche 1 bis 3, dadurch gekennzeichnet, daß der zentrale biegsame dielektrische Leiter (L) planar ist.

3

6. Dielektrischer Wellenleiter nach Anspruch 1, dadurch gekennzeichnet, daß die Dicke (d) der dielektrischen Stege (S) konstant ist.

7. Dielektrischer Wellenleiter nach Anspruch 1, dadurch gekennzeichnet, daß sich die Dicke (d) der dielektrischen Stege (S) in Abhängigkeit vom Abstand von der Leiterlängsachse ändert.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | PATENT ABSTRACTS OF JAPAN vol. 1, no. 103 (E-77)(3274) 13 September 1977, & JP-A-52 35890 (NIPPON DESHIN DENWA KOSHA) 18 März 1977, * das ganze Dokument * | 1,4,6,2,3, 5 | H 01 P 3/16 H 01 P 1/02 G 02 B 6/02 |
| Y,A | FR-A-1 099 862 (SIEMENS & HALSKE AG) * Seite 1, linke Spalte, Zeile 33 - rechte Spalte, Zeile 11 * * Seite 1, rechte Spalte, Zeile 33 - Seite 2, linke Spalte, Zeile 8; Figur 1 * | 2,3,7 | |
| Y,A | JOURNAL OF APPLIED PHYSICS. vol. 57, no. 3, Februar 1985, NEW YORK US Seiten 943 - 955; M.T.WLODARCZYK ET AL.: "Excitation and scattering of guided modes on a dielectric cylinder with a periodically varying radius" * Seite 943, linke Spalte, Zeilen 1 - 9 * * Seite 943, rechte Spalte, Zeilen 6 - 11; Figur 1 EP 91103155030 * | 5,3,4,6 | |
| A | FR-A-1 372 610 (PRACHE) * Seite 2, rechte Spalte, Zeilen 14 - 26; Figur 4 * | 1,2 | |
| A | FR-A-1 195 952 (IMPERIAL CHEMICAL INDUSTRIES LTD) * Seite 1, linke Spalte, Zeile 22 - rechte Spalte, Zeile 6 * * Seite 2, linke Spalte, Zeile 50 - rechte Spalte, Zeile 4; Figuren 3, 4 * | 1 | **RECHERCHIERTE SACHGEBIETE (Int. Cl.5)** H 01 P G 02 B H 01 Q |
| A | US-H-5 84 (SCHWERING ET AL.) * Spalte 2, Zeile 58 - Spalte 3, Zeile 9 * * Spalte 3, Zeile 60 - Spalte 4, Zeile 1; Figur 1 * | 1,3,4,6 | |
| A | GB-A-8 359 76 (LIGNES TELEGRAPHIQUES ET TELE-PHONIQUES) * Seite 2, Zeilen 111 - 130; Figur 4 * | 1 | |

—/—

Der vorliegende Recherchenbericht wurde für alle Patentansprüche erstellt

| Recherchenort | Abschlußdatum der Recherche | Prüfer |
|---|---|---|
| Den Haag | 15 Juli 91 | DEN OTTER A.M. |

**Europäisches Patentamt**

# EUROPÄISCHER
# RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | SOVIET INVENTIONS ILLUSTRATED,Week E21, 07-07-1982,Section W; &SU-A-853721(BEZBORODOV),17-08-1981 * das ganze Dokument * - - - - - | 1,3,4,6 | |
| | | | RECHERCHIERTE SACHGEBIETE (Int. Cl.5) |

**Der vorliegende Recherchenbericht wurde für alle Patentansprüche erstellt**

| Recherchenort | Abschlußdatum der Recherche | Prüfer |
|---|---|---|
| Den Haag | 15 Juli 91 | DEN OTTER A.M. |

KATEGORIE DER GENANNTEN DOKUMENTE
X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument
-----------------------------------------------------------------
&: Mitglied der gleichen Patentfamilie, übereinstimmendes Dokument